# EUROPÄISCHE PATENTSCHRIFT

(11) **EP 1 391 797 B1**
(45) Veröffentlichungstag und Bekanntmachung des Hinweises auf die Patenterteilung: **22.10.2008**
(21) Anmeldenummer: 03018524.3
(22) Anmeldetag: 16.08.2003
(51) Int. Cl.: G05B 19/46, F15B 19/00

(54) **Verfahren zum Kalibrieren von Regelventilen**
Method for calibrating control valve
Méthode de calibration de soupapes de commande

(30) Priorität: 23.08.2002 DE 10239570
(43) Veröffentlichungstag der Anmeldung: 25.02.2004
(73) Patentinhaber: Dango & Dienenthal Maschinenbau GmbH, 57072 Siegen (DE)
(72) Erfinder: Mende, Burkhard, 57250 Netphen (DE); Joppich, Andreas, 57234 Wilnsdorf (DE)
(74) Vertreter: Pürckhauer, Rolf

(56) Entgegenhaltungen:
- DE-A1- 4 136 441
- US-A- 3 995 746
- HEYEN G: "POSITION CONTROL WITH LOW COST PROPORTIONAL VALVES" EUROPEAN JOURNAL FOR FLUID POWER, VEREINIGTE FACHVERLAGE KRAUSSKOPF INGENIEUR DIGEST, MAINZ, DE, Nr. 1, 1. Februar 1992 (1992-02-01), Seiten 20-25, XP000248528 ISSN: 0937-8243
- BANGERT H: "UPDATE ON PROPORTIONAL VALVE PERFORMANCE" HYDRAULICS AND PNEUMATICS, PENTON MEDIA, CLEVELAND, OH, US, Bd. 45, Nr. 6, 1. Juni 1992 (1992-06-01), Seiten 41-44,46, XP000279088 ISSN: 0018-814X

## Beschreibung

Die Erfindung betrifft ein Verfahren zum Kalibrieren von Regelventilen mit Nullschnitt-Kolben für hydraulische Maschinenantriebe, insbesondere für Manipulatoren mit Linearund/oder Drehantrieben für einen Werkzeug- oder Werkstückträger.

Manipulatoren der z.B. aus der DE 41 36 441 C2 bekannten Art werden beispielsweise für den Transport und zum Positionieren schwerer Schmiedestücke mit einem Gewicht über einhundert Kilogramm zu und an Bearbeitungsmaschinen eingesetzt. Je nach Größe und Ausführung ermöglichen Manipulatoren das millimetergenaue Positionieren von Werkstücken mit einem Gewicht von vielen Tonnen. Die Manipulatoren sind mit einer Spannvorrichtung, beispielsweise einer Zange, und einem Hebelsystem zum Bewegen der Zange in mehreren Richtungen oder Freiheitsgraden ausgerüstet, und für jede Bewegung der Zange in einer bestimmten Richtung dient mindestens ein gesonderter Antrieb des Hebelsystems, wobei bei Manipulatoren, die für höhere Traglasten ausgelegt sind, Hydraulikantriebe eingesetzt werden. Die Manipulatoren sind mit Wegemeßsystemen ausgestattet, die eine meßtechnische Erfassung der Positionen der Bewegungsachsen ermöglichen. Das Steuerungskonzept für die Bewegungsachsen der Manipulatoren beruht auf einer Positionsregelung sowie einer manuellen Ansteuerung.

Im Dokument "Position Control with low cost proportional valves" (Heyen G.) sind mehrere Verwendungen von Regelventilen mit Nullschnitt-Kolben für hydraulische Maschinenantriebe offenbart.

Normalerweise werden in der Positions- und Druckregelung Nullschnitt-Kolben eingesetzt und für eine manuelle Ansteuerung werden Regelventile mit positiv überdecktem Kolben verwendet. Regelventile mit Nullschnitt-Kolben haben keine genau definierte Nullstellung. Aus diesem Grund sind derartige Regelventile für Manipulatoren mit Hydraulikantrieben mit einer manuellen Ansteuerung nicht zu empfehlen. Problematisch ist ferner, daß sich der Nullpunkt durch Druck- und Temperaturschwankungen beziehungsweise durch Verschleiß verschiebt. Normalerweise sind Regelventile mit einem Nullschnitt-Kolben mit einer manuellen Einstellmöglichkeit für den Nullpunkt vorgesehen. Die Einstellung dieser Regelventile wird einmalig im Herstellerwerk auf einem Prüfstand durchgeführt. Dabei werden die Arbeitskanäle der Regelventile abgesperrt und mittels Druckmeßdosen wird ein Druckabgleich zwischen den Arbeitskanälen vorgenommen.

Der Erfindung liegt die Aufgabe zugrunde, ein Verfahren zum Kalibrieren von Regelventilen mit Nullschnitt-Kolben zu entwickeln, das es ermöglicht, derartige Regelventile sowohl bei einer Positionsregelung als auch bei einer manuellen Ansteuerung von Hydraulikantrieben einsetzen zu können.

Diese Aufgabe wird erfindungsgemäß gelöst durch ein Kalibrierverfahren für Regelventile mit Nullschnitt-Kolben für hydraulische Maschinenantriebe, das dadurch gekennzeichnet ist, daß bei dem während des Betriebs der Maschine automatisch ablaufenden Kalibriervorgang ein Offsetwert der Stellgröße von der Regeleinrichtung beziehungsweise von dem Stellgerät aufaddiert wird und der permanent anstehende Offsetwert in bestimmten zeitabständen, beispielsweise während der Stillstandszeiten des Hydraulikantriebs, automatisch mittels eines Algorithmus überprüft bzw. korrigiert wird.

Das Kalibrierverfahren wird nachstehend anhand eines hydraulischen Schaltbildes erläutert.

Bei dem Kalibrierverfahren wird der über zwei Druckleitungen 1, 2 an die beiden Arbeitskanäle A, B eines Regelventils 3 angeschlossene Hydraulikantrieb 4 mittels in die Druckleitungen 1, 2 eingebauter Sperrventile 5, 6 abgeschaltet und über Druckmeßdosen 7, 8, die in die Druckleitungsabschnitte 1a, 2a zwischen den Sperrventilen 5, 6 und dem Regelventil 3 eingebaut sind, wird ein Druckabgleich zwischen den Arbeitskanälen A, B des Regelventils 3 durch ein Variieren des Offsetwertes hergestellt.

Idealerweise wird von dem zuvor ermittelten Offsetwert ausgegangen und nach einem festzulegenden Zeitinkrement wird die Druckdifferenz in den Arbeitskanälen A, B sowie die Richtung der Nullpunkt-Verschiebung festgestellt. Überschreitet die Druckdifferenz einen bestimmten Höchstwert, wird der Offsetwert um ein definiertes Sollwertinkrement in Richtung kleinerer Druckdifferenz variiert und nach einem Zeitinkrement wird erneut die Druckdifferenz gemessen.

Dieses Verfahren wird so oft wiederholt, bis die Druckdifferenz zwischen den Arbeitskanälen A, B des Regelventils 3 den zulässigen Höchstwert unterschreitet, bzw. eine Arbeitsbewegung des Hydraulikantriebs 4 eingeleitet wird. Der Offsetwert wird bei jedem Verfahrensgang neu abgespeichert.

Anstelle von Sperrventilen kann der Hydraulikantrieb auch auf eine andere weise abgesperrt werden.

Die Funktion der Druckmeßdosen, der Sperrventile und des Regelventils wird zyklisch während des Abgleichs überprüft. Bei einer Fehlfunktion von mindestens einer dieser Komponenten erfolgt eine Störmeldung und der zuvor ermittelte Offsetwert wird eingefroren. Dieser Zustand bleibt so lange erhalten, bis die Ursache der Störung beseitigt ist.

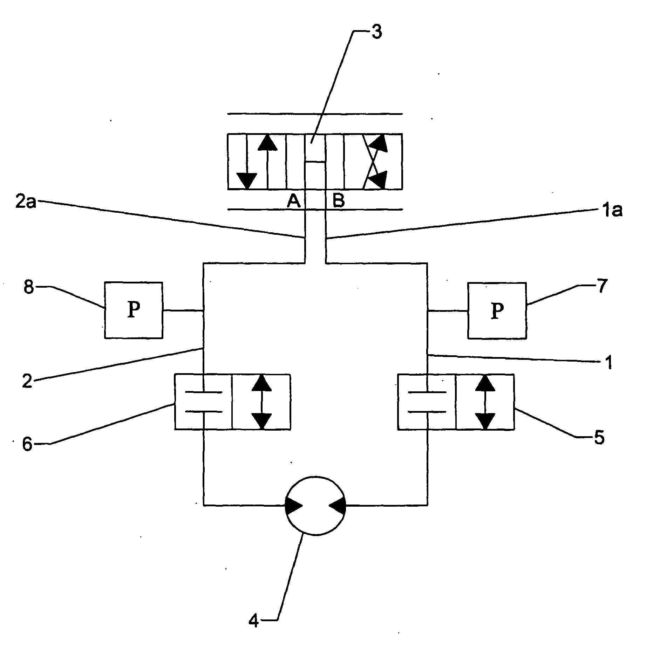

## Patentansprüche

1. Verfahren zum Kalibrieren von Regelventilen mit Nullschnitt-Kolben für hydraulische Maschinenantriebe, insbesondere für Manipulatoren mit Linear- und/oder Drehantrieben für einen Werkzeug- oder Werkstückträger, **dadurch gekennzeichnet, daß** bei dem während des Betriebs der Maschine automatisch ablaufenden Kalibriervorgang ein Offsetwert der Stellgröße von der Regeleinrichtung bzw. von dem Stellgerät aufaddiert wird und der permanent anstehende Offsetwert automatisch mittels eines Algorithmus überprüft beziehungsweise korrigiert wird.

2. Kalibrierverfahren nach Anspruch 1, **dadurch gekennzeichnet, daß** der über Druckleitungen (1, 2) an die Arbeitskanäle (A, B) des Regelventils (3) angeschlossene Hydraulikantrieb (4) mittels in die Druckleitungen (1, 2) eingebauter Sperrventile (5, 6) abgeschaltet wird und über Druckmeßdosen (7, 8), die in die Druckleitungsabschnitte (la, 2a) zwischen den Sperrventilen (5, 6) und dem Regelventil (3) eingebaut sind, ein Druckabgleich zwischen den Arbeitskanälen (A, B) des Regelventils (3) durch ein Variieren des Offsetwertes hergestellt wird, wobei von dem nach Möglichkeit zuvor ermittelten Offsetwert ausgegangen wird und nach einem festzulegenden Zeitinkrement die Druckdifferenz in den Arbeitskanälen (A, B) sowie die Richtung der Nullpunktverschiebung festgestellt werden, bei einer Überschreitung eines bestimmten Höchstwertes der Druckdifferenz der Offsetwert um ein definiertes Sollwertinkrement in Richtung einer kleineren Druckdifferenz variiert und nach einem Zeitinkrement erneut die Druckdifferenz gemessen wird und das Verfahren so lange wiederholt wird, bis die Druckdifferenz zwischen den Arbeitskanälen (A, B)des Regelventils (3) den Höchstwert unterschreitet beziehungsweise eine Arbeitsbewegung der Hydraulikantriebs (4) eingeleitet wird, wobei der Offsetwert bei jedem Verfahrensgang neu abgespeichert wird.

## Claims

1. Method for calibrating control valves with zero-section pistons for hydraulic machine drives, in particular for manipulators with linear and/or rotary drives for a tool- or workpiece carrier, **characterised in that,** during the calibration process which takes place automatically during operation of the machine, an offset value of the adjustment variable is summated by the control device or by the adjustment apparatus and the permanently occurring offset value is checked or corrected automatically by means of an algorithm.

2. Calibration method according to claim 1, **characterised in that** the hydraulic drive (4), which is connected to the working channels (A, B) of the control valve (3) via pressure lines (1, 2), is switched off by means of stop valves (5, 6) which are incorporated in the pressure lines (1, 2), and a pressure equalisation between the working channels (A, B) of the control valve (3) is produced via pressure transducers (7, 8), which are incorporated in the pressure line portions (1a, 2a) between the stop valves (5, 6) and the control valve (3), by means of varying the offset value, the process starting with the offset value determined as far as possible in advance and the pressure difference in the working channels (A, B) and also the direction of the zero point displacement being determined after a time increment which is to be fixed, in the case of a specified maximum value of the pressure difference being exceeded, the offset value being varied by a defined reference value increment in the direction of a smaller pressure difference and the pressure difference being measured once again after a time increment, and the process being repeated until the pressure difference between the working channels (A, B) of the control valve (3) falls below the maximum value or a working movement of the hydraulic drive (4) is initiated, the offset value being stored again in each process stage.

## Revendications

1. Procédé d'étalonnage de soupapes de régulation au moyen d'un piston à recouvrement zéro, pour des entraînements de machines hydrauliques, notamment pour des manipulateurs dotés d'entraînements linéaires et/ou en rotation pour un porte-outil ou un porte-pièce, **caractérisé en ce que**, lors du processus d'étalonnage qui se déroule automatiquement pendant le fonctionnement de la machine, une valeur de décalage de la variable réglante est incrémentée par le dispositif de régulation ou par l'appareil de réglage, et la valeur de décalage présente en permanence est automatiquement vérifiée et le cas échéant corrigée au moyen d'un algorithme.

2. Procédé d'étalonnage selon la revendication 1, **caractérisé en ce que** l'entraînement hydraulique ( 4 ) raccordé via des conduites de pression ( 1, 2 ) aux canaux de travail ( A, B ) de la soupape de régulation ( 3 ) est désactivé au moyen de soupapes d'isolement ( 5, 6 ) incorporées dans les conduites de pression ( 1, 2 ) et, au moyen de boîtes dynamométriques ( 7, 8 ) qui sont incorporées dans les tronçons de conduites de pression ( 1a, 2a ) entre les soupapes d'isolement ( 5, 6 ) et la soupape de régulation ( 3 ), on réalise un équilibrage de pression entre les canaux de travail ( 1, B ) de la soupape de régulation ( 3 ) en faisant varier la valeur de décalage, dans lequel on part de la valeur de décalage si possible préalablement déterminée et qu'après un incrément de temps à définir, on identifie la différence de pression dans les canaux de travail ( A, B ) et la direction du déplacement du point zéro, qu'en cas de dépassement d'une valeur maximale donnée de la différence de pression, la valeur de décalage est modifiée d'un incrément de consigne défini en direction d'une plus petite différence de pression, que la différence de pression est à nouveau mesurée après un incrément de temps, et que le processus est répété jusqu'à ce que la différence de pression entre les canaux de travail ( A, B ) de la soupape de régulation ( 3 ) tombe en dessous de la valeur maximale ou qu'un mouvement de travail de l'entraînement hydraulique ( 4 ) soit introduit, la nouvelle valeur de décalage étant mémorisée à chaque passe du processus.
